# DEMANDE DE BREVET EUROPEEN

(11) **EP 4 279 758 A1**
(43) Date de publication de la demande: **22.11.2023**
(21) Numéro de dépôt: 23171111.0
(22) Date de dépôt: 02.05.2023
(51) Int. Cl.: F16D 3/32, F16D 3/84

(54) **JOINT DE CARDAN LUBRIFIÉ**

(30) Priorité: 20.05.2022 FR 2204817
(71) Demandeur: PSA Automobiles SA, 78300 Poissy (FR)
(72) Inventeur: AFRIAD, IDRISS, 85502 Sidi Ifni (MA); ZAHID, REDA, 20270 SIDI MAAROUF (CASABLANCA) (MA)

(57) **Abrégé**

L'invention concerne un joint de cardan comprenant une glissière centrale (1) sur laquelle sont montés, de part et d'autre de son axe longitudinal (X), une première douille (21) et une seconde douille (22), chacune desdites douilles étant pourvue d'une articulation assurant son pivotement selon un axe (X1, X2) perpendiculaire à l'axe (X) de ladite glissière, caractérisé en ce que chaque articulation comprend une bague (31, 32) montée de façon coulissante sur ladite glissière (1) et raccordée à l'une des douilles (21) de façon à lui assurer une liaison pivotante selon un axe (X1) perpendiculaire à l'axe (X2) de pivotement de l'autre douille (22).

## Description

L'invention concerne, de façon générale, le domaine des liaisons mécaniques dynamiques et s'intéresse, plus particulièrement, aux moyens de transmission de l'énergie de rotation dans la chaîne de traction des véhicules automobiles.

Les cardans, dits aussi joints de cardan, sont des dispositifs mécaniques qui permettent l'accouplement entre deux arbres, respectivement, menant et mené, en corrigeant leurs décalages angulaires et leurs désalignements axiaux.

Ces cardans sont utilisés, notamment, sur les véhicules automobiles pour accoupler deux arbres tournants d'un même système de transmission dont la position angulaire et/ou celle de leur axe longitudinal peut varier, d'un arbre par rapport à l'autre.

Il existe des double joint de cardans télescopiques comprenant deux cardans pourvus chacun de deux axes de pivotement et qui sont reliés par une glissière intermédiaire. Sur cette glissière sont montés, de part et d'autre de son axe longitudinal, une première douille et une seconde douille destinées, respectivement, au raccordement à un premier et à un second arbre tournant, chacune de ces douilles étant pourvue d'une articulation assurant son pivotement selon deux axes perpendiculaires entre eux et par rapport à l'axe de ladite glissière. Ce double joint de cardan comprend donc quatre liaisons rotatives et une liaison coulissante.

Toutefois, du fait de la présence conjointe, dans ce double joint de cardan, de cinq liaisons mécaniques, ce dispositif est encombrant et il s'avère, en outre, qu'il n'assure pas un rendement optimal de la transmission de l'énergie de rotation.

De plus, ces cinq liaisons ne sont pas lubrifiées ce qui conduit à une usure prématurée de ce type de cardan et à des risques de panne.

Le brevet FR2112824A5 décrit un dispositif d'accouplement de deux arbres pour la transmission d'un mouvement rotatif comprenant une rotule de liaison logée dans un soufflet.

Cependant, la rotule de ce dispositif d'accouplement n'intègre que deux axes de rotation ce qui ne permet pas de gérer tous les décalages angulaires et les désalignements axiaux entre les deux arbres. Cette insuffisance est d'autant plus critique pour des véhicules automobiles à transmission longitudinale et/ou transversale. En outre, ce dispositif d'accouplement ne dispose pas de moyen permettant sa lubrification.

Dans ce contexte, l'invention vise à résoudre les problèmes techniques posés par les solutions antérieures et, principalement, à réduire le nombre de liaisons articulées pour gagner en compacité et en poids tout en offrant des moyens aptes à assurer la lubrification permanente de l'ensemble du cardan.

Ce but est atteint, selon un premier aspect de l'invention, au moyen d'un joint de cardan comprenant une glissière centrale sur laquelle sont montés, de part et d'autre de son axe longitudinal, une première douille et une seconde douille destinées, respectivement, au raccordement à un premier et à un second arbre tournant, chacune de ces douilles étant pourvue d'une articulation assurant son pivotement selon un axe perpendiculaire à l'axe de ladite glissière, caractérisé en ce que chaque articulation comprend une bague montée de façon coulissante sur ladite glissière et raccordée à l'une des douilles de façon à lui assurer une liaison pivotante selon un axe perpendiculaire à l'axe de pivotement de l'autre douille..

Selon une caractéristique avantageuse du joint de cardan de l'invention, la paroi des douilles comporte au moins un orifice destiné à recevoir en libre rotation un ergot porté par chacune des bagues.

Selon une variante de réalisation particulière, chaque bague porte deux ergots diamétralement opposés engagés dans des orifices correspondant ménagés dans la paroi des douilles.

De préférence, ces orifices sont pratiqués au travers de pattes s'étendant en saillie à partir des bords d'extrémité des douilles.

Selon une autre caractéristique du joint de cardan de l'invention, la paroi interne les bagues est pourvue de rainures longitudinales de guidage destinées à coulisser sur des nervures en regard réalisés sur la paroi externe de ladite glissière.

Selon une variante spécifique de réalisation, le joint de cardan de l'invention comprend un manchon élastiquement déformable dans lequel sont enfermés de manière étanche la glissière centrale et les bagues de liaison avec les douilles.

Dans ce cas, la paroi du manchon est avantageusement pourvue d'un orifice pour l'injection d'un produit lubrifiant.

De préférence, cet orifice susceptible d'être obturé par un bouchon amovible.

Selon une variante de réalisation particulière, le manchon est formé d'un soufflet en matière élastomère.

Un autre objet de l'invention est un système de transmission pour véhicules automobiles, caractérisé en ce qu'il comprend au moins un joint de cardan présentant les caractéristiques définies ci-dessus.

Encore un autre objet de l'invention est un véhicule automobile équipé d'un système de transmission tel que défini ci-dessus.

Ainsi, dans son principe, l'invention propose de remplacer les double joints de cardan traditionnels par un joint de cardan unique dont la structure est simplifiée en offrant ainsi un allègement et une meilleure compacité par une réduction du nombre des liaisons dynamiques de cinq à trois.

Par conséquent, le joint de cardan de l'invention, en contenant une quantité plus faible de matières et en ayant moins de composants, peut être fabriqué plus facilement et plus rapidement et offre ainsi un gain significatif de coûts et une meilleure ergonomie au montage et au démontage lors d'opérations d'entretien.

En outre, grâce à l'apport de moyens permettant une lubrification optimale et durable, voire permanente, des liaisons mécaniques internes, l'invention permet d'obtenir un meilleur rendement de transmission de l'énergie et une plus faible usure de ces liaisons.

Le joint de cardan de l'invention peut être avantageusement utilisé pour remplacer le cardan homocinétique dans les systèmes de transmissions des véhicules automobiles et plus largement pour répondre à tous besoins de transmission de mouvement ou d'énergie dans un système mécanique et dynamique quelconque.

D'autres caractéristiques et avantages de l'invention ressortiront à la lecture de la description qui va suivre, en référence aux figures annexées, pour lesquelles :
[Fig. 1] est une vue en perspective partiellement éclatée d'un mode de réalisation préférentiel du joint de cardan de l'invention.
[Fig. 2] est une vue de côté partiellement éclatée du joint de cardan de la figure 1.
[Fig. 3] est une vue de détail en perspective éclatée du joint de cardan de de la figure 1.

Pour plus de clarté, les éléments identiques ou similaires sont repérés par des signes de référence identiques sur l'ensemble des figures.

Naturellement, les modes de réalisation du joint de cardan de l'invention illustrés schématiquement par les figures présentées ci-dessus et décrites ci-après, ne sont donnés qu'à titre d'exemples non limitatifs. Il est explicitement prévu dans le cadre de l'invention que l'on puisse proposer et combiner entre eux différents modes pour en proposer d'autres.

Il est précisé que toutes les caractéristiques, telles qu'elles se dégagent pour un homme du métier à la lecture de la présente description, des figures et des revendications associées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'a pas été expressément exclu ou que le contexte technique rende de telles combinaisons impossibles ou dénuées de sens.

L'invention concerne le domaine général des liaisons mécaniques dynamiques et, plus particulièrement, des joints de cardan destinés à assurer l'accouplement de deux arbres tournants.

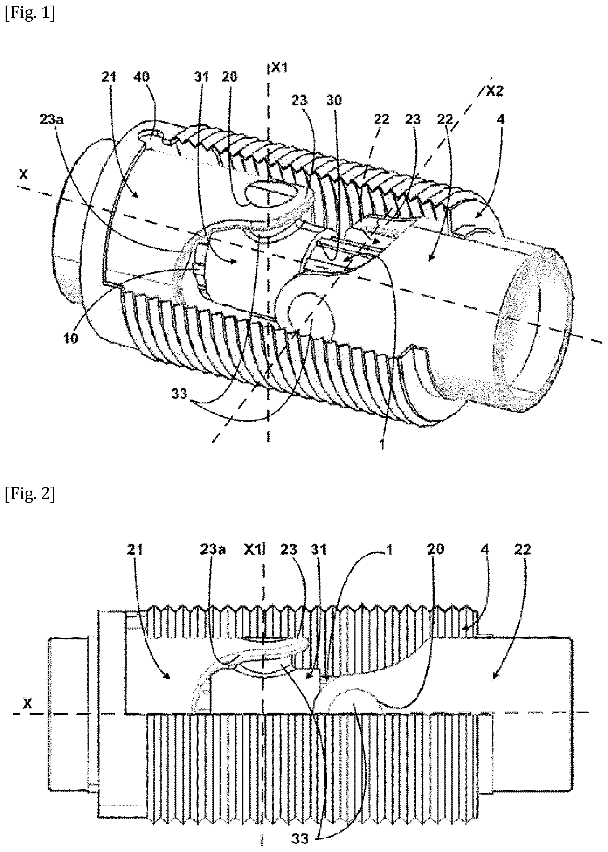

De manière traditionnelle et comme illustré par la figure 1, un joint de cardan comprend une glissière centrale 1 sur laquelle sont montés, de part et d'autre de son axe longitudinal X, une première douille 21 et une seconde douille 22 destinées, respectivement, au raccordement à un premier et à un second arbre tournant (non représentés).

Le mode de réalisation des double joint de cardan traditionnels consiste en ce que chacune de ces douilles soit pourvue d'une articulation assurant son pivotement selon deux axes perpendiculaires à la fois entre eux et par rapport à l'axe X de la glissière. Dans ces conditions, un double joint de cardan comprend alors quatre liaisons pivotantes (deux liaisons pivotantes par douille) et une liaison coulissante centrale, soit cinq liaisons mécaniques dynamiques au total.

L'invention vise à simplifier un tel joint de cardan en réduisant le nombre de liaisons dynamiques sans compromettre, ni même dégrader, la fiabilité et les performances de l'accouplement dynamique et en recherchant, bien au contraire, à obtenir un meilleur rendement de transmission de l'énergie de rotation.

Cet objectif est atteint, grâce à l'invention, en proposant que chaque articulation comprenne une bague 31, 32 qui est destinée à être montée de façon coulissante sur la glissière 1 et qui est raccordée à l'une des douilles de façon à lui assurer une unique liaison pivotante selon un axe perpendiculaire à l'axe X de la glissière 1. En outre, les axes respectifs de pivotement X1, X2 des deux douilles 21, 22 sont perpendiculaires entre eux.

Le joint de cardan de l'invention permet ainsi, à la fois, une translation des bagues 31, 32 sur la glissière 1 selon l'axe X et les pivotements des douilles 21, 22 selon les axes X1, X2 ; les axes X, X1, X2 étant perpendiculaires entre eux deux à deux.

Chaque bague 31, 32 porte au moins un et, dans le mode de réalisation représenté ici sur les figures, deux ergots 33 diamétralement opposés engagés en libre rotation dans des orifices 20 correspondant ménagés dans la paroi des douilles 21, 22.

Comme illustré par les figures 1 à 3, les orifices 20 sont pratiqués au travers de pattes 23 s'étendant en saillie à partir des bords d'extrémité des douilles 21, 22. Plus précisément, les pattes 23 sont des extensions de la paroi des douilles recouvrant, au moins partiellement, les bagues et la glissière 1 et qui sont délimitées latéralement par des congés 23a permettant le débattement de ces douilles lors de leur pivotement sur les bagues 31, 32.

Afin que les axes de pivotement X1, X2 des douilles soient perpendiculaires entre eux, les ergots 33 (et donc les pattes 23) sont disposés selon des diamètres décalés de 90° d'une bague à l'autre.

La paroi interne les bagues 31, 32 est pourvue de rainures longitudinales 30 de guidage destinées à coulisser sur des nervures 10 en regard réalisés sur la paroi externe de la glissière 1. La coopération entre les nervures 10 et le rainures 30 assure aussi le blocage en rotation de la glissière 1. Il est toutefois possible, sans sortir du cadre de l'invention, de prévoir que les nervures soient réalisées sur les bagues et les rainures sur la glissière.

Le joint de cardan de l'invention comprend, en outre, un manchon 4 élastiquement déformable dans lequel sont enfermés de manière étanche la glissière centrale 1, les bagues 31, 32 et les pattes de liaison des douilles 21, 22. Grâce à son élasticité, ce manchon 4 est capable de suivre le pivotement des douilles et la translation des bagues du joint.

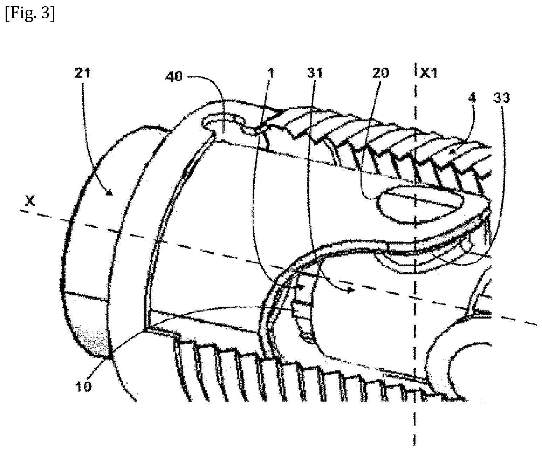

La paroi du manchon 4 est pourvue d'un orifice 40 (visible en détail sur la figure 3) pour l'injection d'un produit lubrifiant. Cet orifice 40 est susceptible d'être obturé par un bouchon amovible (non représenté). De préférence, le manchon 4 est formé d'un soufflet en matière élastomère.

Le manchon 4 englobe toutes les liaisons dynamiques du joint de cardan ce qui permet de les maintenir de façon permanente dans un liquide de lubrification en optimisant ainsi le rendement de transmission de l'énergie de rotation, de réduire conjointement l'usure des composants et donc d'augmenter leur durée de vie.

## Revendications

1. Joint de cardan comprenant une glissière centrale (1) sur laquelle sont montés, de part et d'autre de son axe longitudinal (X), une première douille (21) et une seconde douille (22), chacune desdites douilles étant pourvue d'une articulation assurant son pivotement selon un axe (X1, X2) perpendiculaire à l'axe (X) de ladite glissière, **caractérisé en ce que** chaque articulation comprend une bague (31, 32) montée de façon coulissante sur ladite glissière (1) et raccordée à l'une des douilles (21) de façon à lui assurer une liaison pivotante selon un axe (X1) perpendiculaire à l'axe (X2) de pivotement de l'autre douille (22).

2. Joint de cardan selon la revendication 1, **caractérisé en ce que** la paroi des douilles (21, 22) comporte au moins un orifice (20) destiné à recevoir en libre rotation un ergot (33) porté par chacune des bagues (31, 32).

3. Joint de cardan selon la revendication précédente, **caractérisé en ce que** chaque bague porte deux ergots (33) diamétralement opposés engagés dans des orifices (20) correspondant ménagés dans la paroi des douilles (21, 22).

4. Joint de cardan selon la revendication précédente, **caractérisé en ce que** lesdits orifices (20) sont pratiqués au travers de pattes (23) s'étendant en saillie à partir des bords d'extrémité des douilles (21, 22).

5. Joint de cardan selon l'une des revendications précédentes, **caractérisé en ce que** la paroi interne des bagues (31, 32) est pourvue de rainures longitudinales (30) de guidage destinées à coulisser sur des nervures (10) en regard réalisés sur la paroi externe de ladite glissière (1).

6. Joint de cardan selon l'une des revendications précédentes, **caractérisé en ce qu'**il comprend un manchon (4) élastiquement déformable dans lequel sont enfermés de manière étanche la glissière centrale (1) et les bagues (31, 32) de liaison avec les douilles (21, 22).

7. Joint de cardan selon la revendication précédente, **caractérisé en ce que** la paroi du manchon (4) est pourvue d'un orifice (40) pour l'injection d'un produit lubrifiant susceptible d'être obturé par un bouchon amovible.

8. Joint de cardan selon l'une des revendications 6 ou 7, **caractérisé en ce que** ledit manchon (4) est formé d'un soufflet en matière élastomère.

9. Système de transmission pour véhicules automobiles, **caractérisé en ce qu'**il comprend au moins un joint de cardan selon l'une des revendications précédentes.

10. Véhicule automobile équipé d'un système de transmission selon la revendication 9.
